# EUROPEAN PATENT APPLICATION

(11) **EP 4 389 667 A1**
(43) Date of publication of application: **26.06.2024**
(21) Application number: 23211812.5
(22) Date of filing: 23.11.2023
(51) Int. Cl.: B66B 5/00

(54) **SYSTEM AND METHOD FOR DETECTING AN ELEVATOR MECHANIC WORKING WITHIN AN ELEVATOR HOISTWAY**

(30) Priority: 23.12.2022 US 202218088148
(71) Applicant: Otis Elevator Company, Farmington, Connecticut 06032 (US)
(72) Inventor: SCHIAPPA, Michael, Burlington (US); FRENCH, Micky, Portsmouth (GB); PEDERSEN, Karl D., Terryville (US)
(74) Representative: Dehns

(57) **Abstract**

A system having: an elevator car (103) operationally located in a hoistway (117) of a building (150); one or more local processors (160) operationally coupled to the elevator car and configured to: record operational parameters of the elevator car based on a sample rate and populate, in chronological order, an operational log (200) of the operational parameters with the operational data; one or more remote processors (210) that are configured to communicate with the one or more local processors, receive the operational log, and execute remote operation of the elevator car unless an elevator mechanic (250) is within the building, wherein an alert (260) is issued upon: the local processor, or the remote processor, analyzing the operational log and determining that the elevator mechanic is within the building; or user input received from a networked computing device (235) indicating that the elevator mechanic is within the building responsive to receipt and analysis of the operational log.

## Description

### BACKGROUND

The embodiments described herein are directed to monitoring of elevator systems and more specifically to a system and method for detecting an elevator mechanic working within an elevator hoistway.

Elevator systems can be remotely monitored and controlled. For example, the ability to remotely connect to an elevator system to extract data, to view configuration settings, turn on/off features, or to remotely restore an elevator back to service are services that can be performed remotely. However, depending on the task it is necessary to understand if an elevator mechanic is working on the elevator prior to performing certain remote services. An ability to determine remotely whether a mechanic is onsite and, for example, in a hoistway, may be challenging. Therefore, direct contact with a mechanic may be preferable in some scenarios to determine if they are onsite.

### BRIEF SUMMARY

Disclosed is a system including: an elevator car operationally located in a hoistway of a building; one or more local processors operationally coupled to the elevator car and configured to: record operational parameters of the elevator car based on a sample rate and populate, in chronological order, an operational log of the operational parameters with operational data indicative of the operational parameters; one or more remote processors that are configured to communicate with the one or more local processors, receive the operational log, and execute remote operation of the elevator car unless an elevator mechanic is within the building, wherein an alert is issued upon: the local processor, or the remote processor, analyzing the operational log and determining that the elevator mechanic is within the building; or user input received from a networked computing device indicating that the elevator mechanic is within the building responsive to receipt and analysis of the operational log.

In addition to one or more aspects of the system or as an alternate, the one or more local processors includes: a local processor operationally coupled to the elevator car and that is configured to record the operational parameters of the elevator car based on the sample rate and transmit, over a first network, the operational data indicative of the operational parameters; and a gateway configured to communicate with the local processor over the first network to receive the operational data and populate, in chronological order, the operational log of the operational parameters with the operational data, and wherein the one or more remote processors includes: a remote processor that is configured to communicate with the one or more local processors over a second network to receive the operational log; and the elevator management service center is configured to communicate with the remote processor over a third network and receive the operational log, and execute the remote operation of the elevator car unless the elevator mechanic is within the building.

In addition to one or more aspects of the system or as an alternate, the local processor is an internet of things (IoT) edge computing device and the first network is a local area network; the remote processor is a cloud computing service and the second network is a cellular network; and the sampling rate is less than a minute.

In addition to one or more aspects of the system or as an alternate, the operational data includes operational mode data representing an operational mode of the elevator car at a time of data sampling at the sample rate, and the operational log includes an operational mode table that chronologically lists the operational mode of the elevator car that is extracted from the operational mode data.

In addition to one or more aspects of the system or as an alternate, the local processor or the remote processor is configured to determine that the elevator mechanic is within the building when the operational mode table has one or more entries indicating that the operational mode has changed within a predetermined period of time.

In addition to one or more aspects of the system or as an alternate, the operational data includes event data representing a state of the elevator car at the time of data sampling at the sample rate, and the operational log includes an event buffer table that is configured to chronologically list the state of the elevator car that is extracted from the event data; and
the event data includes a state of one or more of: a floor location; the operational mode; a run speed; a primary car door; a secondary car door; an elevator car stop switch; a hallway door lock; and both the hallway door lock and a primary car door lock.

In addition to one or more aspects of the system or as an alternate, the local processor or the remote processor is configured to determine that the elevator mechanic is within the building from a sequence of entries of the event data.

In addition to one or more aspects of the system or as an alternate, each entry in the event buffer table is configured for being updated to provide additional information, which the local processor or the remote processor is configured to analyze to determine if the elevator mechanic is within the building.

In addition to one or more aspects of the system or as an alternate, the additional information is utilized to confirm that the mechanic was on site and verify a completion to predetermined services.

In addition to one or more aspects of the system or as an alternate, the gateway is further configured to transmit an electronic copy of the operational log to the elevator management service center for manually analyzing the operational log to confirm or determine that the elevator mechanic is within the building.

Further disclosed is a method for determining when a mechanic of an elevator car that is operationally located in a hoistway of a building is within the building, the method including: recording at a sample rate, by one or more local processors that are operationally coupled to the elevator car, operational parameters of the elevator car, and populating, in chronological order, an operational log of the operational parameters with operational data indicative of the operational parameters; transmitting, to one or more remote processors, the operational log, and executing, by the elevator management service center, a remote operation of the elevator car unless an elevator mechanic is within the building; and providing an alert upon: the local processor, or the remote processor, analyzing the operational log and determining that the elevator mechanic is within the building; or receiving user input from a networked computing device indicating that the elevator mechanic is within the building responsive to receipt and analysis of the operational log.

In addition to one or more aspects of the method or as an alternate, the one or more local processors includes: a local processor operationally coupled to the elevator car and that is configured to record the operational parameters of the elevator car based on the sample rate and transmit, over a first network, the operational data indicative of the operational parameters; and a gateway configured to communicate with the local processor over the first network to receive the operational data and populate, in chronological order, the operational log of the operational parameters with the operational data, and wherein the one or more remote processors includes: a remote processor that is configured to communicate with the one or more local processors over a second network to receive the operational log; and the elevator management service center is configured to communicate with the remote processor over a third network and receive the operational log, and execute the remote operation of the elevator car unless the elevator mechanic is within the building.

In addition to one or more aspects of the method or as an alternate, the local processor is an internet of things (IoT) edge computing device and the first network is a local area network; the remote processor is a cloud computing service and the second network is a cellular network; and the sampling rate is less than a minute.

In addition to one or more aspects of the method or as an alternate, the operational data includes operational mode data representing an operational mode of the elevator car at a time of data sampling at the sample rate, and the operational log includes an operational mode table that chronologically lists the operational mode of the elevator car that is extracted from the operational mode data.

In addition to one or more aspects of the method or as an alternate, the method includes determining that the elevator mechanic is within the building when the operational mode table has one or more entries indicating that the operational mode has changed within a predetermined period of time.

In addition to one or more aspects of the method or as an alternate, the operational data includes event data representing a state of the elevator car at the time of data sampling at the sample rate, and the operational log includes an event buffer table that is configured to chronologically list the state of the elevator car that is extracted from the event data; and the event data includes a state of one or more of: a floor location; the operational mode; a run speed; a primary car door; a secondary car door; an elevator car stop switch; a hallway door lock; and both the hallway door lock and a primary car door lock.

In addition to one or more aspects of the method or as an alternate, the method includes determining that the elevator mechanic is within the building from a sequence of entries of the event data.

In addition to one or more aspects of the method or as an alternate, the method includes updating one or more entries in the event buffer table to provide additional information, and determining whether the elevator mechanic is within the building from the one or more entries that are updated.

In addition to one or more aspects of the method or as an alternate, the additional information is utilized to confirm that the mechanic was on site and verify a completion to predetermined services.

In addition to one or more aspects of the method or as an alternate, the method includes transmitting, by the gateway, an electronic copy of the operational log to the elevator management service center for manually analyzing the operational log to confirm or determine that the elevator mechanic is within the building.

### BRIEF DESCRIPTION OF THE DRAWINGS

The present disclosure is illustrated by way of example and not limited in the accompanying figures in which like reference numerals indicate similar elements.
FIG. 1 is a schematic illustration of an elevator system that may employ various embodiments of the present disclosure;
FIG. 2 shows additional aspects of the system for detecting an elevator mechanic working within an elevator hoistway;
FIG. 3 shows an operational mode log and an event log from data obtained from a local processor, operationally coupled to the elevator car, recording operational parameters of the elevator car at a predetermined sample rate;
FIG. 4 shows additional information obtained for the event log; and
FIG. 5 is a flowchart showing a method of detecting an elevator mechanic working within an elevator hoistway.

### DETAILED DESCRIPTION

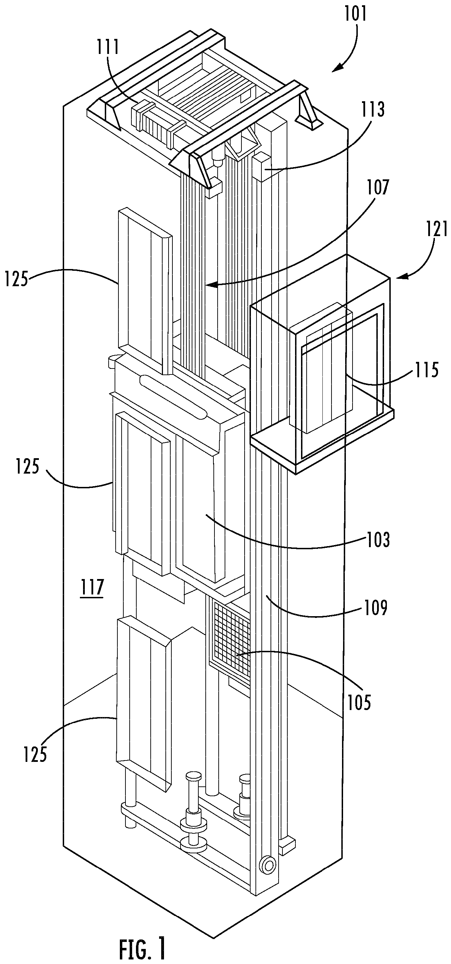

FIG. 1 is a perspective view of an elevator system 101 including an elevator car 103, a counterweight 105, a tension member 107, a guide rail (or rail system) 109, a machine (or machine system) 111, a position reference system 113, and an electronic elevator controller (controller) 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft or hoistway 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the hoistway 117, such as on a support or guide rail, and may be configured to provide position signals related to a position of the elevator car 103 within the hoistway 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The controller 115 is located, as shown, in a controller room 121 of the hoistway 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the hoistway 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within hoistway 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. Embodiments may also be employed in ropeless elevator systems using self-propelled elevator cars (e.g., elevator cars equipped with friction wheels, pinch wheels or traction wheels). FIG. 1 is merely a non-limiting example presented for illustrative and explanatory purposes.

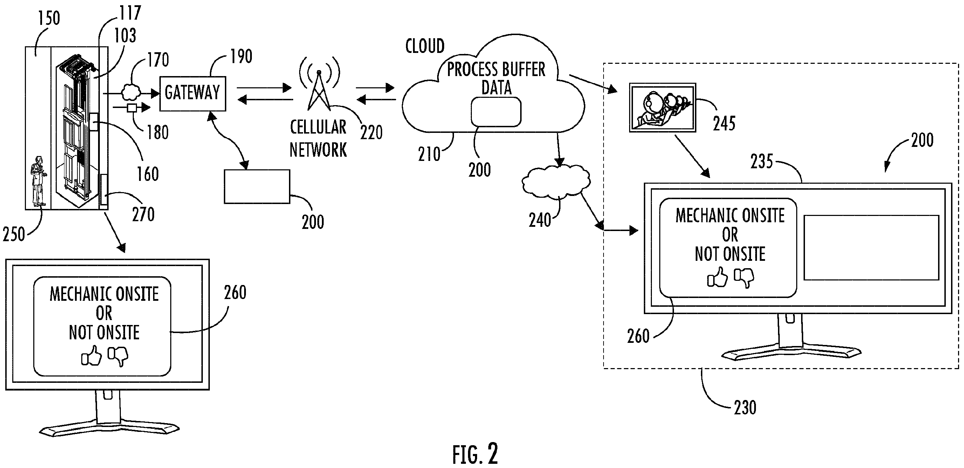

As shown in FIG. 2, the elevator car 103 is operationally located in the hoistway 117 of a building 150. A local processor 160, which may be equipped with appropriate sensors, is operationally coupled to the elevator car 103 and is configured to record operational parameters of the elevator car 103 based on a sample rate and transmit, over a first network 170, operational data 180 indicative of the operational parameters. The local processor 160 may be an internet of things (IoT) edge computing device. The first network 170 may be a local area network. A gateway 190 is configured to communicate with the local processor 160 over the first network 170 to receive the operational data 180 and populate, in chronological order, an operational log 200 of the operational parameters with the operational data 180. The log 200 may be stored on the gateway 190. It is to be appreciated that the local processor 160 and gateway 190 may be combined into a single computing device.

A remote processor 210 is configured to communicate with the gateway 190 over a second network 220 and receive the operational log 200. The remote processor 210 may be a cloud computing service. The second network 220 may be a cellular network. An elevator management service center 230 is configured to communicate with the remote processor over a third network 240 and receive the operational log 200. The third network 240 may be a wide area network. The elevator management service center 230 is configured to execute remote operation of the elevator car 103 unless an elevator mechanic 250 is within the building 150. This is because, for example, the elevator mechanic 250 may be in the hoistway 117 and could become injured if the elevator car 103 is remotely operated during this time. It is to be appreciated that the remote processor 160 and the computing systems at the elevator management service center 230 may be combined into another single computing device.

The local processor 160 or the remote processor 210 may analyze the operational log 200 as historical data. From this analysis, an alert 260 may be provided to the elevator management service center 230 upon determining that the elevator mechanic 250 is within the building 150 and perhaps in the hoistway 117. In one embodiment, a person 245 at the elevator management service center 230, who electronically received a copy of the operational log 200 over the third network 240, may analyze the operational log 200 to confirm, or independently determine, that the elevator mechanic 250 is within the building 150 and perhaps in the hoistway 117. In this circumstance, the alert 260 may be generated by user input to a networked computing device 235 at the elevator management service center 230. The alert 260 may be a status flag visible by those persons utilizing computing systems at the elevator management service center 230 to control the elevator car 103. The alert 260 may be posted at elevator control systems 270 within the building 150.

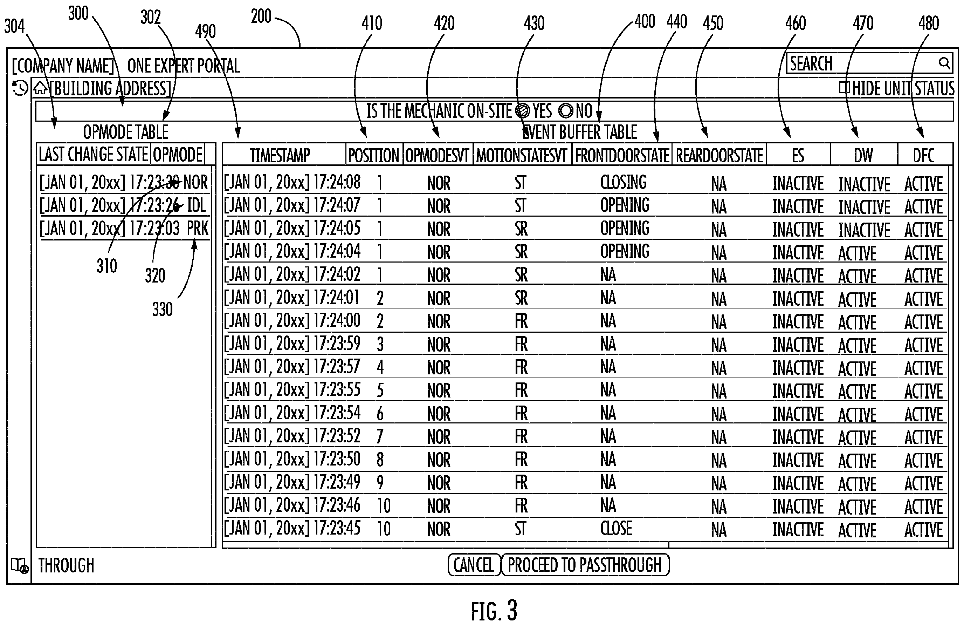

Turning to FIG. 3, the operational data 180 may include operational mode data representing an operational mode of the elevator car 103 at a time of data sampling at the sample rate. The operational log 200 may include an operational mode table 300 that chronologically lists, row by row, changes in the operational mode. Specifically, one column 302 may list changes in the operational mode of the elevator car 103 that are extracted from the operational mode data. The changes are time and date stamped as listed in an adjacent column 304 to determine how recently the last change occurred.

The local processor 160, the remote processor 210 or user input received at the elevator management service center 230 may determine that the elevator mechanic 250 is within the building 150 when the operational mode table 300 has one or more entries 310, 320, 330 indicating that the operational mode has changed within a predetermined period of time. For example, in FIG. 3, the operational mode was changed three times within a short duration over a predetermined range of time, such as within minutes, hours, a single day, multiple days, etc., from normal NOR to idle IDL to park PRK. In the illustrated embodiment, the predetermined range of time is a single day. This change in operational mode, if not implemented remotely by the elevator management service center 230 may be indicative of an elevator mechanic 250 on site and perhaps in the hoistway 117.

Thus, a determination may be made that the elevator mechanic 250 may be onsite and within the hoistway 117. The local processor 160, remote processor 210 or user input received at the elevator management service center 230 making that determination may issue the alert 260 at the elevator management service center 230 and the elevator control systems 270 within the building 150.

The operational data 180 may also include event data representing a state of the elevator car 103 at the time of the data sampling at the sample rate. The operational log 200 may include an event buffer table 400 that is configured to chronologically list, row by row, the state of the elevator car that is sampled and recorded as the event data. The event data may include a state of a floor location in a first column 410, such as the first floor (1), second floor (2), etc. The event data may include a state of an operational mode in a second column 420, such as normal NOR. The event data may include a state of the elevator car run speed in a third column 430, as a fast run FR, a slow run SR or whether the elevator car 103 is stopped ST. The event data may include a state of a primary or front car door in a fourth column 440, such as closing or opening. If the primary door is stationary, such as during a run, the state may be N/A. The event data may include a state of a secondary or rear car door in a fifth column 450. The event data may include a state of an elevator car stop switch in a sixth column 460, such as inactive when not engaged and active when engaged. The event data may include a state of a hallway (landing) door lock in a seventh column 470, such as inactive when not engaged and active when engaged. The event data may include a state of a sum of signals (from signals transmitted by the local processor 160) of the hallway door lock and the car door lock in an eighth column 480. The signals would be indicative of inactive when neither are engaged or active when both are engaged. The event data may be time and/or date stamped in a ninth column 490 to enable a determination whether changes to the state of the elevator car 103 are occurring within a window of time indicative of an elevator mechanic 250 being present.

The local processor 160, the remote processor 210 or user input received at the elevator management service center 230 may determine that the elevator mechanic 250 is within the building 150, and perhaps the hoistway 117, from a sequence of the state data extracted from event data in the event buffer table 400, i.e., from a sequence of entries in the event buffer table 400. For example, engaging the elevator stop switch, the hallway door lock, opening or closing of a hallway door while the elevator car 103 is moving, changing the operational mode, and/or running the elevator car at a speed indicative of testing or service, such as at a slow speed, may be indicative of an elevator mechanic 250 being within the building 150 and working on the elevator car 103 in the hoistway 117.

As indicated, if the local processor 160, remote processor 210 or user unput received at the elevator management service center 230 makes a determination that the elevator mechanic 250 is within the building 150 and working on the elevator car 103 in the hoistway 117, the alert 260 may be issued at the elevator management service center 230 and the elevator control systems 270 within the building 150.

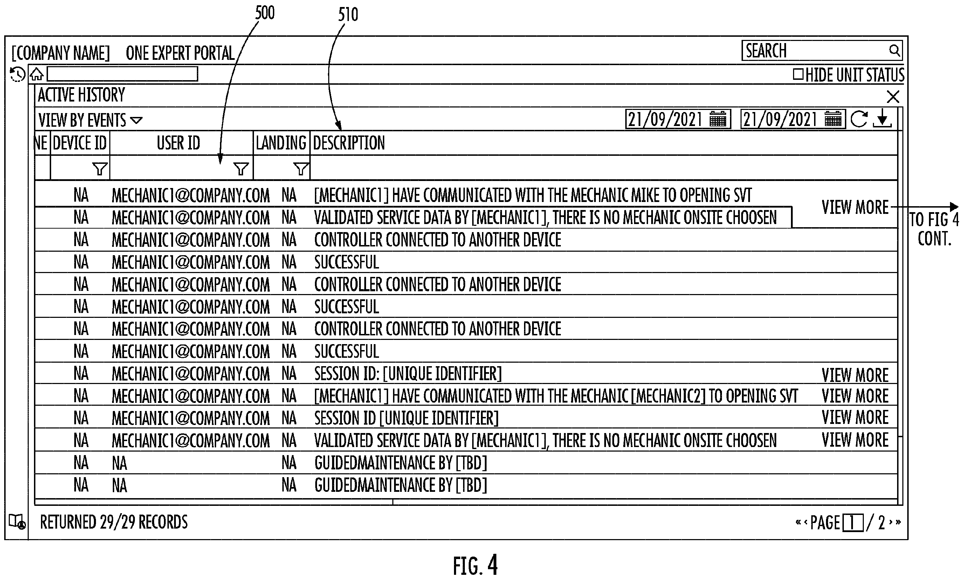

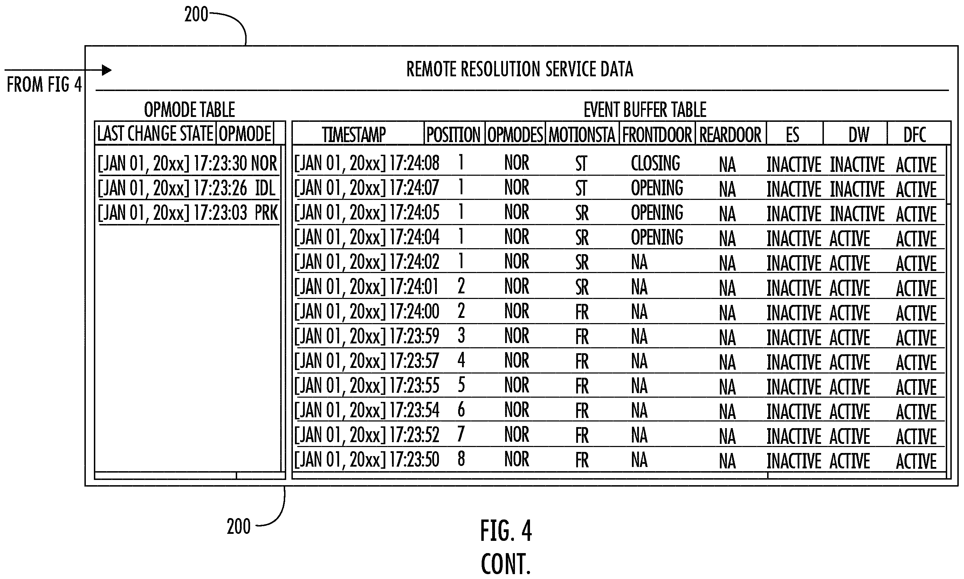

Turning to FIG. 4, the networked computing device 235 at the elevator management service center 230 or the elevator control systems 270 may receive updates, e.g., by the person 245 or mechanic 250, for each of the event data entries in the event buffer table 400 of the operational log 200 to provide additional information. Utilizing this additional information, the local processor 160 or the remote processor 210 or input received by the networked computing device 235 from another person 245 at the elevator management service center 230 may be able to determine if the elevator mechanic 250 is within the building 150 and perhaps in the hoistway 117. The additional information may include an identity of the person adding the information at one column 500 and description of information relevant to the event entry in another column 510. Certain descriptions may be indicative of how long the elevator mechanic 250 typically would be required to remain onsite to work on an elevator car 103 or within a hoistway 117. Throughout such duration, the local processor 160, remote processor 210 or user input received at the elevator management service center 230 would issue the alert 260 at the elevator management service center 230 and the elevator control systems 270 within the building 150.

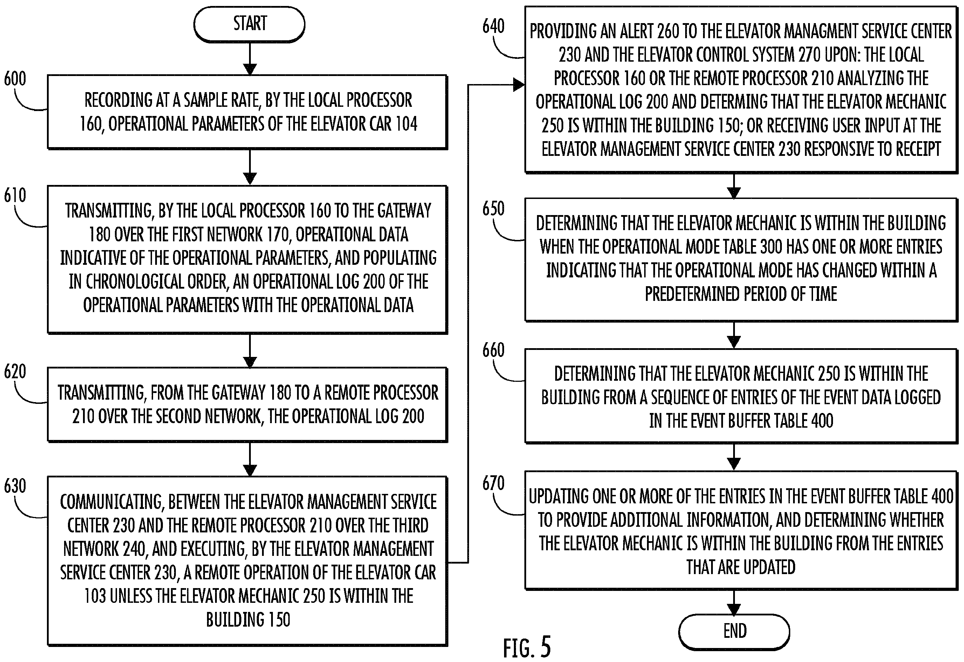

Turning to FIG. 5, a flowchart shows a method for determining when the elevator mechanic is within the building 150 and potentially in the hoistway 117. As shown in block 600, the method includes recording at a sample rate, by the local processor 160, operational parameters of the elevator car 104. As shown in block 610, the method includes transmitting, by the local processor 160 to the gateway 190 over the first network 170, operational data indicative of the operational parameters, and populating, in chronological order, an operational log 200 of the operational parameters with the operational data. As shown in block 620, the method includes transmitting, from the gateway 190 to a remote processor 210 over the second network, the operational log 200.

As shown in block 630, the method includes communicating, between the elevator management service center 230 and the remote processor 210 over the third network 240, and executing, by the elevator management service center 230, a remote operation of the elevator car 103 unless the elevator mechanic 250 is within the building 150. As shown in block 640, the method includes providing an alert 260 to the elevator management service center 230 and the elevator control systems 270 upon: the local processor 160 or the remote processor 210 analyzing the operational log 200 and determining that the elevator mechanic 250 is within the building 150; or receiving user input at the elevator management service center 230 responsive to receipt of the operational log 200.

As shown in block 650, the method includes determining that the elevator mechanic is within the building when the operational mode table 300 has one or more entries indicating that the operational mode has changed within a predetermined period of time. As shown in block 660, the method includes determining that the elevator mechanic 250 is within the building from a sequence of the event data logged in the event buffer table 400. As shown in block 670, the method includes updating one or more of the entries in the event buffer table 400 to provide additional information, and determining whether the elevator mechanic is within the building from the entries that are updated. In one embodiment the additional information could also be utilized to confirm that a mechanic was on site at some point in time, i.e., to verify that a required service took place.

As disclosed above, to determine if a mechanic is onsite, an internet of things (IoT) edge computing device, generically referred to as a local processor, that may include a sensor and be operationally coupled to the elevator car, samples and senses the status of controller signals and the operational mode of the elevator. Each time one of the sampled signals or elevator mode changes states, the change is recorded and stored on the local processor. The stored information provides a historical view of the elevator system, signal, and modes. Within the historical data set, it can be determined if a mechanic has influenced the elevator while onsite. The historical information is placed in an event buffer so it can be packaged and disseminated from the local processor to a cloud service, also referred to as a remote processor. The processing of the historical data and logic to determine if a mechanic is onsite can be performed on the local processor, the remote processor, or performed manually. Utilizing historical data and real time updates of sampled signals and modes provides the ability to determine if a mechanic is onsite over a large window of time.

Sensor data identified herein may be obtained and processed separately, or simultaneously and stitched together, or a combination thereof, and may be processed in a raw or complied form. The sensor data may be processed on the sensor (e.g. via edge computing), by controllers identified or implicated herein, on a cloud service, or by a combination of one or more of these computing systems. The senor may communicate the data via wired or wireless transmission lines, applying one or more protocols as indicated below.

Wireless connections may apply protocols that include local area network (LAN, or WLAN for wireless LAN) protocols. LAN protocols include WiFi technology, based on the Section 802.11 standards from the Institute of Electrical and Electronics Engineers (IEEE). Other applicable protocols include Low Power WAN (LPWAN), which is a wireless wide area network (WAN) designed to allow long-range communications at a low bit rates, to enable end devices to operate for extended periods of time (years) using battery power. Long Range WAN (LoRaWAN) is one type of LPWAN maintained by the LoRa Alliance, and is a media access control (MAC) layer protocol for transferring management and application messages between a network server and application server, respectively. LAN and WAN protocols may be generally considered TCP/IP protocols (transmission control protocol/Internet protocol), used to govern the connection of computer systems to the Internet. Wireless connections may also apply protocols that include private area network (PAN) protocols. PAN protocols include, for example, Bluetooth Low Energy (BTLE), which is a wireless technology standard designed and marketed by the Bluetooth Special Interest Group (SIG) for exchanging data over short distances using short-wavelength radio waves. PAN protocols also include Zigbee, a technology based on Section 802.15.4 protocols from the IEEE, representing a suite of high-level communication protocols used to create personal area networks with small, low-power digital radios for low-power low-bandwidth needs. Such protocols also include Z-Wave, which is a wireless communications protocol supported by the Z-Wave Alliance that uses a mesh network, applying low-energy radio waves to communicate between devices such as appliances, allowing for wireless control of the same.

Wireless connections may also include radio-frequency identification (RFID) technology, used for communicating with an integrated chip (IC), e.g., on an RFID smartcard. In addition, Sub-1Ghz RF equipment operates in the ISM (industrial, scientific and medical) spectrum bands below Sub 1Ghz - typically in the 769 - 935 MHz, 315 Mhz and the 468 Mhz frequency range. This spectrum band below 1Ghz is particularly useful for RF IOT (internet of things) applications. The Internet of things (IoT) describes the network of physical objects-"things"-that are embedded with sensors, software, and other technologies for the purpose of connecting and exchanging data with other devices and systems over the Internet. Other LPWAN-IOT technologies include narrowband internet of things (NB-IOT) and Category M1 internet of things (Cat M1-IOT). Wireless communications for the disclosed systems may include cellular, e.g. 2G/3G/4G (etc.). Other wireless platforms based on RFID technologies include Near-Field-Communication (NFC), which is a set of communication protocols for low-speed communications, e.g., to exchange date between electronic devices over a short distance. NFC standards are defined by the ISO/IEC (defined below), the NFC Forum and the GSMA (Global System for Mobile Communications) group. The above is not intended on limiting the scope of applicable wireless technologies.

Wired connections may include connections (cables/interfaces) under RS (recommended standard)-422, also known as the TIA/EIA-422, which is a technical standard supported by the Telecommunications Industry Association (TIA) and which originated by the Electronic Industries Alliance (EIA) that specifies electrical characteristics of a digital signaling circuit. Wired connections may also include (cables/interfaces) under the RS-232 standard for serial communication transmission of data, which formally defines signals connecting between a DTE (data terminal equipment) such as a computer terminal, and a DCE (data circuit-terminating equipment or data communication equipment), such as a modem. Wired connections may also include connections (cables/interfaces) under the Modbus serial communications protocol, managed by the Modbus Organization. Modbus is a master/slave protocol designed for use with its programmable logic controllers (PLCs) and which is a commonly available means of connecting industrial electronic devices. Wireless connections may also include connectors (cables/interfaces) under the PROFibus (Process Field Bus) standard managed by PROFIBUS & PROFINET International (PI). PROFibus which is a standard for fieldbus communication in automation technology, openly published as part of IEC (International Electrotechnical Commission) 61158. Wired communications may also be over a Controller Area Network (CAN) bus. A CAN is a vehicle bus standard that allow microcontrollers and devices to communicate with each other in applications without a host computer. CAN is a message-based protocol released by the International Organization for Standards (ISO). The above is not intended on limiting the scope of applicable wired technologies.

When data is transmitted over a network between end processors as identified herein, the data may be transmitted in raw form or may be processed in whole or part at any one of the end processors or an intermediate processor, e.g., at a cloud service (e.g. where at least a portion of the transmission path is wireless) or other processor. The data may be parsed at any one of the processors, partially or completely processed or complied, and may then be stitched together or maintained as separate packets of information. Each processor or controller identified herein may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory identified herein may be but is not limited to a random access memory (RAM), read only memory (ROM), or other electronic, optical, magnetic or any other computer readable medium.

The controller may further include, in addition to a processor and nonvolatile memory, one or more input and/or output (I/O) device interface(s) that are communicatively coupled via an onboard (local) interface to communicate among other devices. The onboard interface may include, for example but not limited to, an onboard system bus, including a control bus (for inter-device communications), an address bus (for physical addressing) and a data bus (for transferring data). That is, the system bus may enable the electronic communications between the processor, memory and I/O connections. The I/O connections may also include wired connections and/or wireless connections identified herein. The onboard interface may have additional elements, which are omitted for simplicity, such as controllers, buffers (caches), drivers, repeaters, and receivers to enable electronic communications. The memory may execute programs, access data, or lookup charts, or a combination of each, in furtherance of its processing, all of which may be stored in advance or received during execution of its processes by other computing devices, e.g., via a cloud service or other network connection identified herein with other processors.

Embodiments can be in the form of processor-implemented processes and devices for practicing those processes, such as processor. Embodiments can also be in the form of computer code based modules, e.g., computer program code (e.g., computer program product) containing instructions embodied in tangible media (e.g., non-transitory computer readable medium), such as floppy diskettes, CD ROMs, hard drives, on processor registers as firmware, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes a device for practicing the exemplary embodiments. When implemented on a general-purpose microprocessor, the computer program code segments configure the microprocessor to create specific logic circuits.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A system comprising:
an elevator car operationally located in a hoistway of a building;
one or more local processors operationally coupled to the elevator car and configured to:
record operational parameters of the elevator car based on a sample rate and populate, in chronological order, an operational log of the operational parameters with operational data indicative of the operational parameters;
one or more remote processors that are configured to communicate with the one or more local processors, receive the operational log, and execute remote operation of the elevator car unless an elevator mechanic is within the building,
wherein an alert is issued upon:
the local processor, or the remote processor, analyzing the operational log and determining that the elevator mechanic is within the building; or
user input received from a networked computing device indicating that the elevator mechanic is within the building responsive to receipt and analysis of the operational log.

2. The system of claim 1, wherein:
the one or more local processors includes:
a local processor operationally coupled to the elevator car and that is configured to record the operational parameters of the elevator car based on the sample rate and transmit, over a first network, the operational data indicative of the operational parameters; and
a gateway configured to communicate with the local processor over the first network to receive the operational data and populate, in chronological order, the operational log of the operational parameters with the operational data, and
wherein the one or more remote processors includes:
a remote processor that is configured to communicate with the one or more local processors over a second network to receive the operational log; and
the elevator management service center is configured to communicate with the remote processor over a third network and receive the operational log, and execute the remote operation of the elevator car unless the elevator mechanic is within the building.

3. The system of claim 2, wherein:
the local processor is an internet of things (IoT) edge computing device and the first network is a local area network;
the remote processor is a cloud computing service and the second network is a cellular network; and
the sampling rate is less than a minute.

4. The system of any preceding claim, wherein:
the operational data includes operational mode data representing an operational mode of the elevator car at a time of data sampling at the sample rate, and the operational log includes an operational mode table that chronologically lists the operational mode of the elevator car that is extracted from the operational mode data.

5. The system of claim 4, wherein:
the local processor or the remote processor is configured to determine that the elevator mechanic is within the building when the operational mode table has one or more entries indicating that the operational mode has changed within a predetermined period of time.

6. The system of claim 4 or 5, wherein:
the operational data includes event data representing a state of the elevator car at the time of data sampling at the sample rate, and the operational log includes an event buffer table that is configured to chronologically list the state of the elevator car that is extracted from the event data; and
the event data includes a state of one or more of: a floor location; the operational mode; a run speed; a primary car door; a secondary car door; an elevator car stop switch; a hallway door lock; and both the hallway door lock and a primary car door lock, wherein optionally:
the local processor or the remote processor is configured to determine that the elevator mechanic is within the building from a sequence of entries of the event data.

7. The system of claim 6, wherein:
each entry in the event buffer table is configured for being updated to provide additional information, which the local processor or the remote processor is configured to analyze to determine if the elevator mechanic is within the building, wherein optionally:
the additional information is utilized to confirm that the mechanic was on site and verify a completion to predetermined services.

8. The system of claim 2 or 3, or any of claims 4 to 7 when dependent on claim 2 or 3, wherein:
the gateway is further configured to transmit an electronic copy of the operational log to the elevator management service center for manually analyzing the operational log to confirm or determine that the elevator mechanic is within the building.

9. A method for determining when a mechanic of an elevator car that is operationally located in a hoistway of a building is within the building, the method comprising:
recording at a sample rate, by one or more local processors that are operationally coupled to the elevator car, operational parameters of the elevator car, and populating, in chronological order, an operational log of the operational parameters with operational data indicative of the operational parameters;
transmitting, to one or more remote processors, the operational log, and executing, by the elevator management service center, a remote operation of the elevator car unless an elevator mechanic is within the building; and
providing an alert upon:
the local processor, or the remote processor, analyzing the operational log and determining that the elevator mechanic is within the building; or
receiving user input from a networked computing device indicating that the elevator mechanic is within the building responsive to receipt and analysis of the operational log.

10. The method of claim 9, wherein:
the one or more local processors includes:
a local processor operationally coupled to the elevator car and that is configured to record the operational parameters of the elevator car based on the sample rate and transmit, over a first network, the operational data indicative of the operational parameters; and
a gateway configured to communicate with the local processor over the first network to receive the operational data and populate, in chronological order, the operational log of the operational parameters with the operational data, and
wherein the one or more remote processors includes:
a remote processor that is configured to communicate with the one or more local processors over a second network to receive the operational log; and
the elevator management service center is configured to communicate with the remote processor over a third network and receive the operational log, and execute the remote operation of the elevator car unless the elevator mechanic is within the building.

11. The method of claim 10, wherein:
the local processor is an internet of things (IoT) edge computing device and the first network is a local area network;
the remote processor is a cloud computing service and the second network is a cellular network; and
the sampling rate is less than a minute.

12. The method of any of claims 9 to 11, wherein:
the operational data includes operational mode data representing an operational mode of the elevator car at a time of data sampling at the sample rate, and the operational log includes an operational mode table that chronologically lists the operational mode of the elevator car that is extracted from the operational mode data, optionally further comprising:
determining that the elevator mechanic is within the building when the operational mode table has one or more entries indicating that the operational mode has changed within a predetermined period of time.

13. The method of claim 12, wherein:
the operational data includes event data representing a state of the elevator car at the time of data sampling at the sample rate, and the operational log includes an event buffer table that is configured to chronologically list the state of the elevator car that is extracted from the event data; and
the event data includes a state of one or more of: a floor location; the operational mode; a run speed; a primary car door; a secondary car door; an elevator car stop switch; a hallway door lock; and both the hallway door lock and a primary car door lock, optionally further comprising:
determining that the elevator mechanic is within the building from a sequence of entries of the event data.

14. The method of claim 13, further comprising:
updating one or more entries in the event buffer table to provide additional information, and determining whether the elevator mechanic is within the building from the one or more entries that are updated, wherein optionally,
the additional information is utilized to confirm that the mechanic was on site and verify a completion to predetermined services.

15. The method of claim 10 or 11, or any of claims 12 to 14 when dependent on claim 10 or 11, further comprising:
transmitting, by the gateway, an electronic copy of the operational log to the elevator management service center for manually analyzing the operational log to confirm or determine that the elevator mechanic is within the building.
